# EUROPÄISCHE PATENTSCHRIFT

(11) **EP 1 534 491 B1**
(45) Veröffentlichungstag und Bekanntmachung des Hinweises auf die Patenterteilung: **05.07.2006**
(21) Anmeldenummer: 03793591.3
(22) Anmeldetag: 07.08.2003
(51) Int. Cl.: B29C 45/14, F02D 9/10, F16K 1/226

(54) **VERFAHREN ZUM ABSCHLIESSEN EINES DROSSELKLAPPENSTUTZENS**
METHOD FOR SEALING A THROTTLE VALVE SUPPORT
PROCEDE DE SEPARATION D'UNE TUBULURE A PAPILLON

(30) Priorität: 03.09.2002 DE 10240624
(43) Veröffentlichungstag der Anmeldung: 01.06.2005
(73) Patentinhaber: SIEMENS AKTIENGESELLSCHAFT, 80333 München (DE)
(72) Erfinder: HANNEWALD, Thomas, 64347 Griesheim (DE)
(86) Internationale Anmeldenummer: PCT/DE2003/002665
(87) Internationale Veröffentlichungsnummer: WO 2004/022304

(56) Entgegenhaltungen:
- EP-A- 1 035 312
- WO-A-02/48586
- WO-A-95/16854
- DE-A- 4 323 078
- DE-A- 10 050 393

## Beschreibung

Verfahren zum Abschließen von Drosselklappenstutzen sind bekannt. Das Abschließen erfolgt dabei mit Drosselklappen, die mittig im Drosselklappenstutzen auf einer Drosselklappenwelle angeordnet sind. Für eine möglichst niedrige Leerlaufdrehzahl muß die Drosselklappe dabei sehr dicht schließen können, so dass eine nachteilige Leckluft vermieden wird. Bei den heutigen mechanisch oder elektrisch angetriebenen Drosselklappenstutzen versucht man dies durch sehr enge Toleranzen der einzelnen Bauteile zu erreichen. Dies erfordert ein relativ hohen Fertigungsaufwand für den Drosselklappenstutzen und die Drosselklappe, die auf diese engen Toleranzen feinst gedreht werden muß. Dabei muß darauf geachtet werden, dass die Drosselklappe möglichst dicht an der Innenwand des Drosselklappenstutzens anliegt, die Innenwand aber nicht zu fest berührt, da es sonst zu einem Verklemmen der Drosselklappe kommen kann.

Der Erfindung liegt daher die Aufgabe zugrunde, ein Verfahren zum Abschließen eines Drosselklappenstutzens zu schaffen, bei dem auf eine aufwändige Nachbearbeitung des Drosselklappenstutzens oder der Drosselklappe verzichtet werden kann.

Die der Erfindung zugrundeliegende Aufgabe wird durch ein Verfahren zum Abschließen eines Drosselklappenstutzens gelöst, bei dem in einem ersten Schritt mindestens ein elastisches Ausgleichselement, das teilkreisförmig ausgebildet ist und an seiner Außenseite einen Vorsprung aufweist, um eine Drosselklappenwelle fixiert wird, in einem zweiten Schritt ein erster Stempel und ein zweiter Stempel von beiden Seiten in den Drosselklappenstutzen eingefahren werden, bis sie jeweils an dem Vorsprung anliegen und zwischen ihnen beiden und dem jeweiligen Vorsprung einen, die Drosselklappenwelle umfassenden Hohlraum bilden, anschließend in einem dritten Schritt ein aufgeschmolzener Kunststoff durch den ersten Stempel oder den zweiten Stempel in den Hohlraum eingegeben wird, wobei das mindestens eine elastische Ausgleichselement mit seinem Vorsprung an die Innenwand des Drosselklappenstutzens angedrückt wird und der erste Stempel und der zweite Stempel nach Aushärtung des Kunststoffes in einem vierten Schritt aus dem Drosselklappenstutzen entfernt werden. Der Vorsprung ist in der Regel beidseitig ausgebildet, so dass das mindestens eine elastische Ausgleichselement im Bereich der Innenwand des Drosselklappenstutzens einen T-förmigen Querschnitt aufweist. Im Grenzfall ist es aber auch möglich, dass der Vorsprung mit seiner Dicke gegen 0 geht, also dann mit der Bezeichnung Vorsprung lediglich der Rand des mindestens einen elastischen Ausgleichselements gemeint ist. In diesem Fall weist das mindestens eine elastische Ausgleichselement einen rechteckigen Querschnitt auf. Es wird im ersten Schritt um eine Drosselklappenwelle fixiert, was beispielsweise durch Andrücken an die Drosselklappenwelle erfolgen kann. Als mindestens ein elastisches Ausgleichselement können beispielsweise zwei elastische Ausgleichselemente eingesetzt werden, die jeweils mit ihren Enden an der Drosselklappenwelle anliegen. Das mindestens eine elastische Ausgleichselement ist derart dimensioniert, dass nach der Fixierung um die Drosselklappenwelle ein Spalt von beispielsweise 0,1 bis 0,5 mm verbleibt. Im zweiten Schritt werden ein erster Stempel und ein zweiter Stempel von beiden Seiten in den Drosselklappenstutzen eingefahren, bis sie jeweils an dem Vorsprung anliegen. Dabei erfolgt eine axiale Abdichtung über das mindestens eine elastische Ausgleichselement. Der gebildete Hohlraum hat die Form der anzuordnenden Drosselklappe, wobei gleichzeitig der gewünschte Anstellwinkel der zu schaffenden Drosselklappe durch die Form des Hohlraumes vorgegeben wird. Im dritten Schritt wird ein aufgeschmolzener Kunststoff durch den ersten Stempel oder den zweiten Stempel in den Hohlraum eingegeben.

Bei dem ersten Stempel oder bei dem zweiten Stempel handelt es sich um zylinderförmige Vollkörper, die in der Regel aus Stahl bestehen. Der aufgeschmolzene Kunststoff kann dabei entweder durch den ersten Stempel oder durch den zweiten Stempel oder durch den ersten Stempel und den zweiten Stempel in den Hohlraum eingegeben werden. Eine eventuell erforderliche Entlüftung erfolgt dann ebenfalls über den ersten Stempel oder den zweiten Stempel. Durch das Eingeben des aufgeschmolzenen Kunststoffes wird das mindestens eine elastische Ausgleichselement an die Innenwand des Drosselklappenstutzens angedrückt. Es hat sich in überraschender Weise gezeigt, dass nach diesem Verfahren ein Abschließen des Drosselklappenstutzens in der Weise erfolgen kann, so dass es bei der Einstellung der Leerlaufdrehzahl nicht zu einer Bildung von Leckluft kommt. Dabei ist vorteilhaft, dass auf die Einstellung von geringen Toleranzbereichen der Drosselklappe und des Drosselklappenstutzens verzichtet werden kann. Die Drosselklappe muß somit nicht feinst gedreht werden, und der Drosselklappenstutzen muß ebenfalls an seiner Innenwand nicht aufwändig nachbearbeitet werden.

Eine bevorzugte Ausgestaltung der Erfindung besteht darin, dass der erste Schritt mit dem zweiten Schritt gleichzeitig durchgeführt wird. Dies erleichtert die Fixierung des mindestens einen elastischen Ausgleichselements und verkürzt die erforderliche Zeit zur Durchführung des Verfahrens.

Gemäß einer weiteren bevorzugten Ausgestaltung der Erfindung wird mindestens ein elastisches Ausgleichselement eingesetzt, das Bohrungen aufweist, die nebeneinander auf dem Teilkreis angeordnet sind. In diese Bohrungen kann der aufgeschmolzene Kunststoff eindringen, so dass die Verbindung zwischen dem ausgehärteten Kunststoff und dem mindestens einen elastischen Ausgleichselement, die die eigentliche Drosselklappe darstellt, besonders stabil ausgebildet werden kann.

Nach einer weiteren bevorzugten Ausgestaltung der Erfindung ist vorgesehen, dass das mindestens eine elastische Ausgleichselement oder der aufgeschmolzene Kunststoff aus Polyamid-6 bestehen. Polyamid-6 ist besonders widerstandsfähig, gerade unter den Bedingungen, wie sie in Drosselklappenstutzen während des Betriebs zu verzeichnen sind.

Eine weitere bevorzugte Ausgestaltung der Erfindung besteht darin, dass als aufgeschmolzener Kunststoff ein Polyphenylensulfid eingesetzt wird. Polyphenylensulfid eignet sich besonders zur Ausbildung der Drosselklappe, und läßt sich besonders vorteilhaft aushärten.

Gemäß einer weiteren bevorzugten Ausgestaltung der Erfindung bildet der gebildete Hohlraum an seiner, der Drosselklappenwelle abgewandten Seite nutförmige Einkerbungen. Diese nutförmigen Einkerbungen werden im dritten Schritt von dem aufgeschmolzenen Kunststoff ausgefüllt, was direkt zur Bildung von Verstärkungsrippen bei der Aushärtung des Kunststoffes führt, so dass die aus dem Kunststoff und dem mindestens einen elastischen Ausgleichselement bestehende Drosselklappe eine besonders hohe Stabilität aufweist.

Nach einer weiteren bevorzugten Ausgestaltung der Erfindung wird das elastische Ausgleichselement einteilig ausgeführt und weist zwei gegenüberliegende Durchbrüche auf und wird im ersten Schritt mit den zwei gegenüberliegenden Durchbrüchen auf die Drosselklappenwelle aufgeschoben. Auf diese Weise wird die Positionierung des mindestens einen elastischen Ausgleichselementes in vorteilhafter Weise vereinfacht. Die zwei gegenüberliegenden Durchbrüche können dabei so gestaltet sein, dass sie jeweils in die Lagerbohrungen für die Drosselklappenwelle hineinragen. Dadurch wird in vorteilhafter Weise eine Luftabdichtung zum Wellendurchbruch erreicht. Der Innendurchmesser der gegenüberliegenden Durchbrüche entspricht somit in etwa dem Außendurchmesser der Drosselklappenwelle, wobei natürlich sicherzustellen ist, dass das elastische Ausgleichselement noch auf die Drosselklappenwelle aufgeschoben werden kann.

Die Erfindung wird nachfolgend anhand der Zeichnung (Fig. 1 bis Fig. 3) näher und beispielhaft erläutert.

Fig. 1 zeigt einen Drosselklappenstutzen im Querschnitt mit dem elastischen Ausgleichselement und der Drosselklappenwelle.

Fig. 2 zeigt den Drosselklappenstutzen im Querschnitt gemäß Schnitt A-A in Fig. 1.

Fig. 3 zeigt eine vereinfachte Darstellung des Drosselklappenstutzens im Querschnitt mit dem ersten Stempel und dem zweiten Stempel.

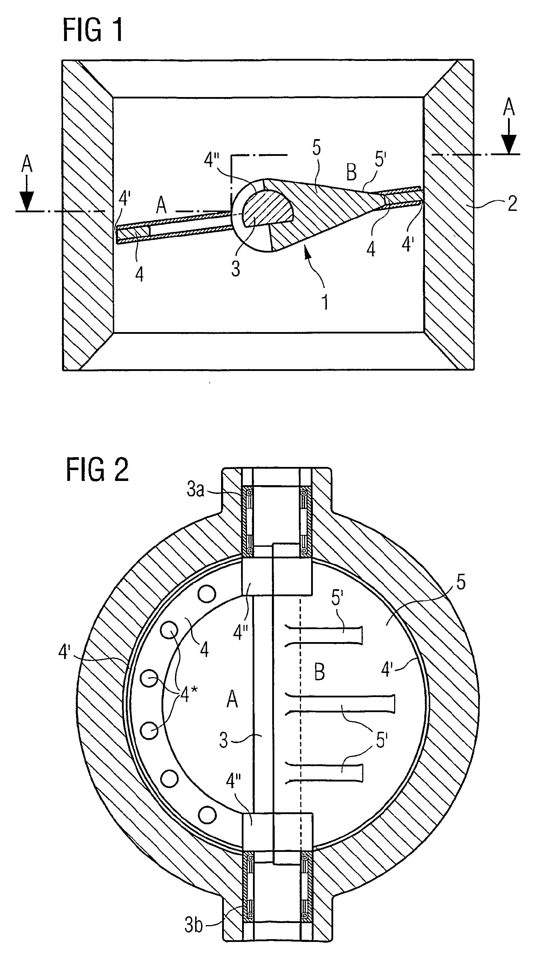

In Fig. 1 ist der Drosselklappenstutzen 2 im Querschnitt dargestellt. Die hälftige Darstellung A zeigt dabei den Zustand, in welchem das elastische Ausgleichselement 4 noch einen gewissen Abstand zum Drosselklappenstutzen 2 aufweist. Es ist mit einem Vorsprung 4' versehen, und bildet mit diesem einen T-förmigen Querschnitt. In der,hälftigen Darstellung B liegt das elastische Ausgleichselement 4 mit seinem Vorsprung 4' direkt an der Innenwand des Drosselklappenstutzens 2 an. Bei dem Verfahren zum Abschließen des Drosselklappenstutzens 2 wird in einem ersten Schritt mindestens ein elastisches Ausgleichselement 4, das teilkreisförmig ausgebildet ist und an seiner Außenseite einen Vorsprung 4' aufweist, um eine Drosselklappenwelle 3 fixiert. Dies kann beispielsweise dadurch geschehen, dass ein elastisches Ausgleichselement eingesetzt wird, das dabei gegen die Drosselklappenwelle 3 gedrückt werden kann. In einem zweiten Schritt werden ein erster Stempel und ein zweiter Stempel (nicht dargestellt) von beiden Seiten in dem Drosselklappenstutzen 2 eingefahren, bis sie jeweils an dem Vorsprung 4' anliegen. Dadurch wird zwischen ihnen beiden und dem jeweiligen Vorsprung 4' ein, die Drosselklappenwelle umfassender Hohlraum gebildet. Dieser Hohlraum wird dabei so ausgestaltet, dass er der Form der zu schaffenden Drosselklappe 1 entspricht. In diesen Hohlraum wird im dritten Schritt ein aufgeschmolzener Kunststoff entweder durch den ersten Stempel oder durch den zweiten Stempel oder durch beide Stempel (jeweils nicht dargestellt) in den Hohlraum eingegeben, wobei gleichzeitig das mindestens eine elastische Ausgleichselement 4 mit seinem Vorsprung 4' an die Innenwand des Drosselklappenstutzens 2 angedrückt wird, wie es in der hälftigen Darstellung B dargestellt ist. Die Aushärtung des Kunststoffes führt dabei direkt zur Bildung der Drosselklappe 1, die aus dem ausgehärteten Kunststoff und dem elastischem Ausgleichselement 4 besteht. Das mindestens eine elastische Ausgleichselement 4 kann einteilig ausgeführt sein und zwei gegenüberliegende Durchbrüche 4" aufweisen. Im ersten Schritt wird dieses einteilige elastische Ausgleichselement mit den zwei gegenüberliegenden Durchbrüchen 4" auf die Drosselklappenwelle 3 aufgeschoben.

In Fig. 2 ist der Drosselklappenstutzen 2 im Querschnitt gemäß Schnitt A-A in Fig. 1 dargestellt. Die Drosselklappenwelle 3 wird in zwei Lagern 3a, 3b gelagert. Das elastische Ausgleichselement 4 weist zwei gegenüberliegende Durchbrüche 4'' auf, die die Drosselklappenwelle 3 umfassen. Sie können dabei auch in die Lagerbohrungen der Lager 3a, 3b hineinragen, wodurch eine Luftabdichtung zum Wellendurchbruch in vorteilhafter Weise erzielt werden kann. Das elastische Ausgleichselement 4 weist Bohrungen 4* auf, die nebeneinander auf dem Teilkreis angeordnet sind. Auch in ihnen kann der eingegebene aufgeschmolzene Kunststoff aushärten, was zu einer Erhöhung der Stabilität der Drosselklappe führt. Durch die im gebildeten Hohlraum (nicht dargestellt) an seiner der Drosselklappenwelle abgewandten Seite geschaffenen nutförmigen Einkerbungen werden beim Aushärten Vorsprünge 5' geschaffen, die ebenfalls zur Erhöhung der Stabilität beitragen.

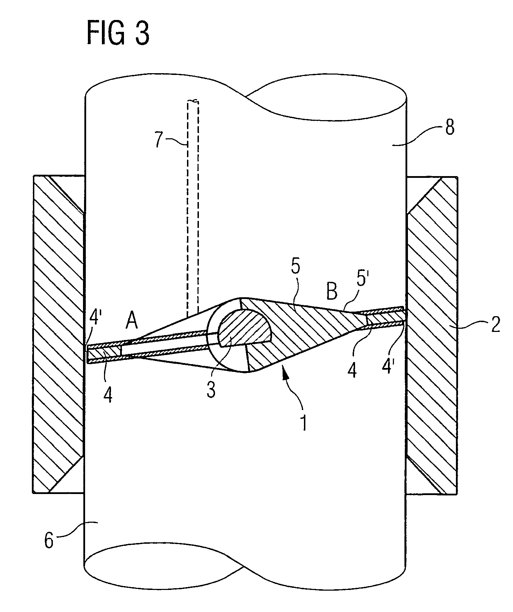

In Fig. 3 ist der Drosselklappenstutzen 2 im Querschnitt zusammen mit dem ersten Stempel 6 und dem zweiten Stempel 8 schematisch und vereinfacht dargestellt. Der zweite Stempel 8 ist mit einem Zufuhrkanal 7 versehen, durch welchen der aufgeschmolzene Kunststoff eingegeben wird. Die hälftige Darstellung A zeigt dabei den Abschluß vom zweiten Schritt. Anschließend wird in einem dritten Schritt der aufgeschmolzene Kunststoff durch den zweiten Stempel 8 eingegeben, wobei das mindestens eine elastische Ausgleichselement 4 mit seinem Vorsprung 4' an die Innenwand des Drosselklappenstutzens 2 angedrückt wird. Die hälftige Darstellung B zeigt somit den Abschluß des dritten Schrittes des Verfahrens.

## Patentansprüche

1. Verfahren zum Abschließen eines Drosselklappenstutzens (2), bei dem in einem ersten Schritt mindestens ein elastisches Ausgleichselement (4), das teilkreisförmig ausgebildet ist und an seiner Außenseite einen Vorsprung (4') aufweist, um eine Drosselklappenwelle (3) fixiert wird, in einem zweiten Schritt ein erster Stempel (6) und ein zweiter Stempel (8) von beiden Seiten in den Drosselklappenstutzen (2) eingefahren werden, bis sie jeweils an dem Vorsprung (4') anliegen, und zwischen ihnen beiden und dem jeweiligen Vorsprung (4') einen, die Drosselklappenwelle (3) umfassenden Hohlraum bilden, anschließend in einem dritten Schritt ein aufgeschmolzener Kunststoff durch den ersten Stempel (6) oder den zweiten Stempel (8) in den Hohlraum eingegeben wird, wobei das mindestens eine elastische Ausgleichselement (4) mit seinem Vorsprung (4') an die Innenwand des Drosselklappenstutzens (2) angedrückt wird und der erste Stempel (6) und der zweite Stempel (8) nach Aushärtung des Kunststoffes in einem vierten Schritt aus dem Drosselklappenstutzen (2) entfernt werden.

2. Verfahren nach Anspruch 1, bei dem der erste Schritt mit dem zweiten Schritt gleichzeitig durchgeführt wird.

3. Verfahren nach Anspruch 1 oder Anspruch 2, bei dem mindestens ein elastisches Ausgleichselement (4) eingesetzt wird, das Bohrungen (4*) aufweist, die nebeneinander auf dem Teilkreis angeordnet sind.

4. Verfahren nach einem der Ansprüche 1 bis 3, bei dem das mindestens eine elastische Ausgleichselement (4) oder der aufgeschmolzene Kunststoff aus Polyamid-6 bestehen.

5. Verfahren nach einem der Ansprüche 1 bis 3, bei dem als aufgeschmolzener Kunststoff ein Polyphenylensulfid eingesetzt wird.

6. Verfahren nach einem der Ansprüche 1 bis 5, bei dem der gebildete Hohlraum an seiner, der Drosselklappenwelle (3) abgewandten Seite nutförmige Einkerbungen bildet.

7. Verfahren nach einem der Ansprüche 1 bis 6, bei dem das elastische Ausgleichselement (4) einteilig ausgeführt ist und zwei gegenüberliegende Durchbrüche (4'') aufweist und das im ersten Schritt mit den zwei gegenüberliegenden Durchbrüchen (4'') auf die Drosselklappenwelle (3) aufgeschoben wird.

## Claims

1. Method for closing off a throttle valve assembly (2), in which, in a first step, at least one elastic compensation element (4), which is of part-circular design and has a projection (4') on its outside, is fixed around a throttle valve shaft (3), in a second step a first die (6) and a second die (8) are introduced into the throttle valve assembly (2) from both sides, until they bear in each case against the projection (4') and between the two of them and the respective projection (4') form a cavity surrounding the throttle valve shaft (3), subsequently, in a third step, a melted-down plastic is introduced into the cavity through the first die (6) or the second die (8), the at least one elastic compensation element (4) being pressed with its projection (4') against the inner wall of the throttle valve assembly (2), and, in a fourth step, the first die (6) and the second die (8) being removed from the throttle valve assembly (2) after the curing of the plastic.

2. Method according to Claim 1, in which the first step is carried out simultaneously with the second step.

3. Method according to Claim 1 or Claim 2, in which at least one elastic compensation element (4) is used which has bores (4*) arranged next to one another on the part circle.

4. Method according to one of Claims 1 to 3, in which the at least one elastic compensation element (4) or the melted-down plastic consists of polyamide-6.

5. Method according to one of Claims 1 to 3, in which the melted-down plastic used is a polyphenylenesulfide.

6. Method according to one of Claims 1 to 5, in which the cavity formed forms groove-shaped indentations on its side facing away from the throttle valve shaft (3).

7. Method according to one of Claims 1 to 6, in which the elastic compensation element (4) is produced as one part and has two opposite perforations (4") and, in the first step, is pushed with the two opposite perforations (4") onto the throttle valve shaft (3).

## Revendications

1. Procédé de fabrication permettant de fermer une tubulure (2) à papillon de régulation des gaz, pour lequel, au cours d'une première phase du procédé, au moins un élément élastique de compensation (4), qui a la forme d'un arc de cercle et qui comporte une saillie (4') sur sa face extérieure, est fixé autour d'un arbre (3) du papillon de régulation des gaz, au cours d'une deuxième phase du procédé, un premier tampon (6) et un deuxième tampon (8) sont engagés des deux côtés dans la tubulure (2) à papillon de régulation des gaz jusqu'à ce qu'ils soient appliqués chacun par leur saillie (4') et forment, entre eux deux et la saillie respective (4'), un espace vide entourant l'arbre (3) du papillon de régulation des gaz, ensuite, au cours d'une troisième phase du procédé, une matière plastique en fusion est introduite dans l'espace vide à travers le premier tampon (6) ou le deuxième tampon (8), le au moins un élément de compensation (4) étant alors pressé par sa saillie (4') contre la paroi intérieure de la tubulure (2) à papillon de régulation des gaz et le premier tampon (6) et le second tampon (8) étant, au cours d'une quatrième phase du procédé, après la solidification de la matière plastique, retirés de la tubulure (2) à papillon de régulation des gaz.

2. Procédé selon la revendication 1, au cours duquel la première phase est exécutée en même temps que la deuxième phase du procédé.

3. Procédé selon la revendication 1 ou la revendication 2, au cours duquel est mis en oeuvre au moins un élément élastique de compensation (4) comportant des trous (4*) disposés les uns à côté des autres sur l'arc de cercle.

4. Procédé selon l'une des revendications 1 à 3, au cours duquel le au moins un élément élastique de compensation (4) ou la matière plastique en fusion sont en polyamide 6.

5. Procédé selon l'une des revendications 1 à 3, au cours duquel, en tant que matière plastique en fusion, on met en oeuvre un polysulfure de phénilène.

6. Procédé selon l'une des revendications 1 à 5, au cours duquel l'espace vide formé produit des entailles en forme de rainures sur son côté opposé à l'arbre (3) du papillon de régulation des gaz.

7. Procédé selon l'une des revendications 1 à 6, au cours duquel l'élément élastique de compensation (4) est exécuté en une seule pièce et comporte deux pièces de traversée (4") opposées l'une à l'autre et est, au cours de la première phase du procédé, enfiché par les deux pièces de traversée (4") opposées l'une à l'autre sur l'arbre (3) du papillon de régulation des gaz.
